# EUROPÄISCHE PATENTANMELDUNG

(11) **EP 1 635 050 A2**
(43) Veröffentlichungstag der Anmeldung: **15.03.2006**
(21) Anmeldenummer: 05016392.2
(22) Anmeldetag: 28.07.2005
(51) Int. Cl.: F02B 29/04

(54) **Befestigungsanordnung für einen Ladeluftkühler in einem Kraftfahrzeug**

(30) Priorität: 14.09.2004 DE 102004044856
(71) Anmelder: Behr GmbH & Co. KG, 70469 Stuttgart (DE)
(72) Erfinder: Kaiser, Jürgen, 71254 Ditzingen (DE); Schnittger, Karsten, Dipl.-Ing., 70439 Stuttgart (DE)

(57) **Zusammenfassung**

Die Erfindung betrifft eine Befestigungsanordnung für einen Ladeluftkühler (3) in einem Kraftfahrzeug, wobei der Ladeluftkühler (3) Luftkästen (8, 9) mit Ladeluftstutzen (12, 13) für den Ein- und Austritt von Ladeluft und einen Rohrrippenblock (5) aufweist, wobei im Bereich der Ladeluftstutzen (12, 13) am Kraftfahrzeug abstützbare Befestigungsmittel (15, 16) vorzugsweise vorgesehen sind und wobei die Ladeluftstutzen (12, 13) durch je eine Schnittstelle (10, 11) von den Luftkästen (8, 9) entkoppelbar sowie zu einem Stutzenkörper (14) miteinander verbunden sind.

## Beschreibung

Die Erfindung betrifft eine Befestigungsanordnung für einen Ladeluftkühler in einem Kraftfahrzeug, wobei der Ladeluftkühler Luftkästen mit Ladeluftstutzen für den Ein- und Austritt von Ladeluft aufweist.

In der älteren Anmeldung der Anmelderin ist eine Befestigungsanordnung für einen Ladeluftkühler, insbesondere für ein Kühlmodul beschrieben, bei welcher die auf den Ladeluftkühler wirkenden Gaskräfte durch Zugstreben aufgenommen werden, die einerseits mittels eines Querholmes an den Ladeluftstutzen des Ladeluftkühlers angreifen und andererseits fahrzeugseitig abgestützt sind. Damit wird der Vorteil erreicht, dass die nicht unerheblichen Gaskräfte direkt in den Fahrzeugrahmen eingeleitet werden und der Ladeluftkühler selbst, insbesondere die Verbindungen zwischen Ladeluftkasten und Rohrboden sowie zwischen Rohrboden und Rohren weitestgehend entlastet sind. Es ergibt sich allerdings keine vollständige Entlastung des Ladeluftkastens und des Rohrrippenblockes.

Es ist Aufgabe der vorliegenden Erfindung, eine weitestgehende Entlastung des Ladeluftkühlers, insbesondere im Bereich der Verbindungen zwischen Ladeluftkasten und Rohrboden sowie zwischen Rohren und Rohrboden zu erreichen.

Diese Aufgabe wird durch die Merkmale des Patentanspruches 1 gelöst. Erfindungsgemäß ist vorgesehen, dass zwischen den zu einem gemeinsamen Stutzenkörper verbundenen Ladeluftstutzen und den Ladeluftkästen eine Schnittstelle angeordnet ist, welche eine Entkoppelung in der Weise bewirkt, dass keine äußeren Kräfte und Momente von dem Stutzenkörper auf den Rohrrippenblock des Ladeluftkühlers übertragen werden. Der Rohrrippenblock wird im Wesentlichen nur mit der Innendruckbelastung beaufschlagt. Insbesondere die Verbindung zwischen Ladeluftkasten und Rohrboden, vielfach eine mechanische Bördelverbindung, wird von schädlichen Biegemomenten entlastet, so dass die Dichtwirkung dieser Verbindung erhalten bleibt. Ebenso werden die Rohr/Rohrbodenverbindungen, in der Regel Lötverbindungen, von Biegemomenten entlastet. Dies ergibt den Vorteil, dass der Ladeluftkühler eine höhere Lebensdauer, eine größere Sicherheit gegen Undichtwerden erhält und darüber hinaus leichter dimensioniert werden kann.

Nach einer vorteilhaften Weiterbildung der Erfindung ist die Schnittstelle als flexibles Strömungskanalelement ausgebildet, vorzugsweise als elastischer Schlauch, durch welchen die Ladeluft strömt, der jedoch keine Momente vom Ladeluftstutzen auf den Ladeluftkasten überträgt.

In weiterer vorteilhafter Ausgestaltung der Erfindung sind an den Ladeluftstutzen bzw. dem Stutzenkörper Zugstreben angefenkt, welche die auf die Ladeluftstutren wirkenden Gaskräfte aufnehmen und direkt in den Rahmen des Fahrzeuges einleiten - dies kann prinzipiell auch durch nur eine, vorzugsweise symmetrisch angeordnete Zugstrebe erfolgen.

Nach einer weiteren vorteilhaften Ausgestaltung der Erfindung ist der Befestigungspunkt für die Anlenkung der Zugstreben derart an den Ladeluftstutzen bzw. dem Stutzenkörper angeordnet, dass er "momentenfrei" ist - d. h. die Summe der aus den Gaskräften und den Zugstrebenkräften resultierenden Momente ist im Befestigungspunkt annähernd gleich Null. Die Gaskräfte wirken dabei einerseits auf den Ein- bzw. Austrittsquerschnitt der Ladeluftstutzen und andererseits auf den Schnittstellenquerschnitt.

Nach einer vorteilhaften Weiterbildung der Erfindung ist der Ladeluftkühler mit einem Kühlmittelkühler zu einem Kühlmodul verbunden, welches über den Kühlmittelkühler fahrzeugseitig abgestützt ist. Vorteilhafterweise sind die Ladeluftstutzen im Bereich des Befestigungspunktes für die Zugstreben mit dem Kühlmittelkühler verbunden, so dass die Zugstreben neben der Einleitung der Gaskräfte in den Fahrzeugrahmen auch den Kühlmittelkühler und damit das Kühlmodul fahrzeugseitig abstützen. Dies ist besonders dann vorteilhaft, wenn der Kühlmittelkühler in weiterer vorteilhafter Ausgestaltung der Erfindung über seitliche Stütz- bzw. Schwenklager gegenüber dem Fahrzeugrahmen gelagert ist. Eine Nickbewegung um die gemeinsame Schwenkachse der Schwenklager wird dann von den Zugstreben aufgenommen.

Ein Ausführungsbeispiel der Erfindung ist in der Zeichnung dargestellt und wird im Folgenden näher beschrieben. Es zeigen
- Fig. 1: ein Kühlmodul, bestehend aus einem Kühlmittel- und einem Ladeluftkühler, in 3-D-Darstellung und
- Fig. 2: eine Prinzipskizze des Kühlmodules gemäß Fig. 1 in einer Ansicht von der Seite.

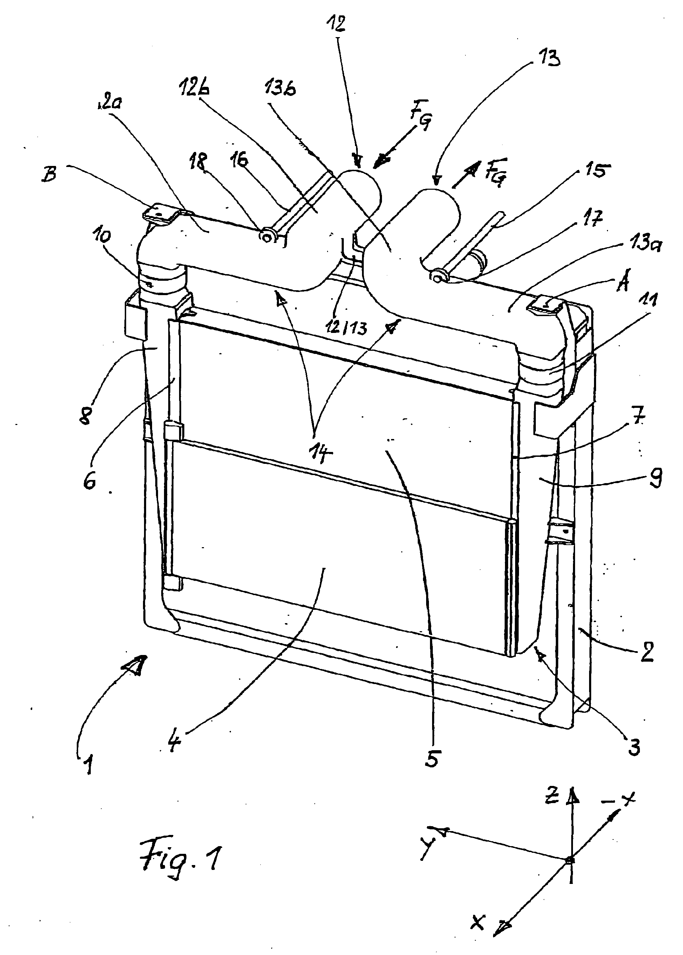

**Fig. 1** zeigt in perspektivischer Darstellung ein Kühlmodul 1, welches aus einem Kühlmittelkühler 2 und einem Ladeluftkühler 3 sowie einem Kondensator 4 zusammengesetzt ist. Ein derartiges Kühlmodul 1 findet vorzugsweise bei Nutzfahrzeugen Anwendung, wobei der Kühlmittelkühler an einen nicht dargestellten Kühlmittelkreislauf einer Brennkraftmaschine des Fahrzeuges angeschlossen ist, während der Ladeluftkühler der Kühlung der aufgeladenen Verbrennungsluft der Brennkraftmaschine dient. Der Kondensator 4 ist an einen nicht dargestellten Kältemittelkreislauf einer Klimaanlage angeschlossen. Das gesamte Kühlmodul 1 ist über den Kühlmittelkühler - was jedoch nicht dargestellt ist - gegenüber dem Fahrzeug abgestützt. Sämtliche drei Wärmeübertrager 2, 3, 4 werden hintereinander von Umgebungsluft durchströmt, welche durch einen nicht dargestellten Lüfter förderbar ist. Der Ladeluftkühler 3 weist - wie an sich bekannt - einen gelöteten Rohrrippenblock 5 auf, welcher aus nicht dargestellten Flachrohren, welche von Ladeluft durchströmbar sind, und nicht dargestellten Wellrippen, welche von der Kühlluft überströmbar sind, zusammengesetzt ist. Die Enden der Rohre des Blockes 5 sind in Rohröden 6, 7 aufgenommen, die ihrerseits mit Ladeluftkästen 8, 9, kurz Luftkästen genannt, verbunden sind. Die Rohrböden 6, 7 bestehen vorzugsweise aus einer Aluminiumlegierung und sind mit den Rohrenden des Blockes 5 verlötet. Die Luftkästen 8, 9 sind vorzugsweise aus Kunststoff ausgebildet und mit den Rohrböden 6, 7 durch eine nicht näher dargestellte mechanische Bördelverbindung verbunden. Möglich sind jedoch auch Aluminiumluftkästen, die mit den Rohrböden verschweißt sind. Die Luftkästen 8, 9 weisen jeweils Schmalseiten 8a, 9a auf, welche jeweils mit Schlauchabschnitten 10, 11 in Verbindung stehen, an welche sich jeweils gekrümmte Ladeluftstutzenteile 12, 13, kurz Stutzenteile, anschließen. Die Stutzenteile 12, 13 sind mehrfach gekrümmt - zur näheren Beschreibung wird auf das neben dem Kühlmodul 1 dargestellte Achsenkreuz mit den Achsen x, y, z Bezug genommen, wobei x die Fahrtrichtung des Kraftfahrzeuges und z die Hochachse darstellt. Die Stutzenteile 12, 13 weisen jeweils aufeinander zulaufende Stutzenabschnitte 12a, 13a sowie in x-Richtung verlaufende Ein- und Austrittsstutzen 12b, 13b auf. Die Stutzenteile 12, 13 sind im Bereich der Ein- und Austrittsstutzen 12b, 13b durch eine Brücke 12/13 miteinander verbunden, so dass sie einen zusammenhängenden Stutzenkörper 14 bilden. Die an den Stutzenabschnitten 12a und 13a angreifenden Kräfte rufen kein äußeres Moment um die x-Achse auf den Stutzenkörper 14 hervor. Die verdichtete und erhitzte Ladeluft tritt in den Eintrittsstutzen 12b ein und verlässt den Ladeluftkühler abgekühlt über den Austrittsstutzen 13b. Dabei werden Gaskräfte, dargestellt durch entgegengesetzt gerichtete Pfeile F_{G} in positiver und negativer x-Richtung wirksam. An den Stutzenteilen 12, 13 greifen Zugstreben 15, 16 an, welche über als Augen ausgebildete Befestigungspunkte 17, 18 mit den Stutzenteilen 12, 13 verbunden und in nicht dargestellter Weise fahrzeugseitig befestigt sind. Die Zugstreben 15, 16 verlaufen im Wesentlichen in x-Richtung, d. h. im Wesentlichen parallel zu den Gaskräften F_{G} und leiten die Gaskräfte direkt in den nicht dargestellten Fahrzeugrahmen ein. Durch die flexibel ausgebildeten Schlauchabschnitte 10, 11 werden die Stutzenteile 12, 13 und die zugehörigen Luftkästen 8, 9 kräftemäßig in x- und y-Richtung entkoppelt. Auf den durch die Schlauchabschnitte 10, 11 isolierten Ladeluftkühler 3 wirken somit im Wesentlichen nur die eigenen Gewichts- und Beschleunigungskräfte sowie Gaskräfte in z-Richtung. Der Ladelüftkühler 3 ist über seine Luftkästen 8, 9 auf nicht näher erläuterte Weise mit dem Rahmen des Kühlmittelkühlers 2 verbunden. An den Stutzenteilen 13, 12 sind Befestigungspunkte A, B vorgesehen, auf die unten näher eingegangen wird.

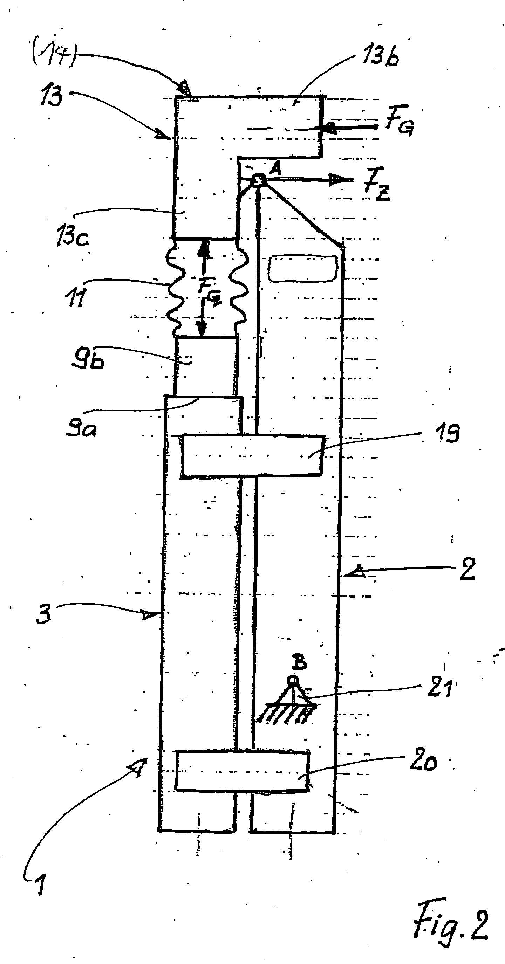

**Fig. 2** zeigt eine schematische Darstellung des Kühlmodules 1 (es werden gleiche Bezugsziffem für gleiche Teile verwendet), bestehend aus Kühlmittelkühler 2 und Ladeluftkühler 3, welche durch Verbindungselemente 19, 20 zusammengehalten werden. Das Kühlmodul 1 ist in einer Seitenansicht dargestellt, man sieht also auf den Luftkasten 9, der sich auf seiner Schmalseite 9a in einem Ansatzstück 9b fortsetzt. Das in der Seitenansicht winklig ausgebildete Stutzenteil 13 (Teil des Stutzenkörpers 14) weist den horizontal, d. h. in x-Richtung angeordneten Eintrittsstutzen 13b und senkrecht dazu einen Stutzenabschnitt 13c auf, welcher mit dem Schlauchabschnitt 11 verbunden ist, der seinerseits am Ansatzstück 9b des Luftkastens 9 befestigt ist. Das Stutzenteil 13 steht somit über den Schlauchabschnitt 11 in Strömungsmittelverbindung mit dem Luftkasten 9, ist jedoch in Bezug auf übertragbare mechanische Kräfte und Momente entkoppelt. Der Schlauchabschnitt 11 bildet somit eine weiche Schnittstelle, die nur Gaskräfte überträgt. Das Stutzenteil 13 weist einen Befestigungspunkt A auf, welcher den Befestigungspunkten A und B in Fig. 1 entspricht. Der Stutzenkörper 14 ist in dem Punkt A (und ebenso in dem Punkt B) gelenkig oder fest mit dem Kühler 2 verbunden. Die Anlenkung der Zugstrebe (vgl. Zugstreben 15, 16 in Fig. 1) wird idealerweise auf Höhe des Befestigungspunktes A realisiert. Der Stutzenkörper 14 bleibt somit frei von äußeren Momenten um die y-Achse. Das gesamte Kühlmodul ist in einem fahrzeugseitigen Lager 21 abgestützt, welches einen Gelenkpunkt C aufweist, durch welchen eine senkrecht zur Zeichenebene, d. h. in y-Richtung verlaufende Schwenkachse verläuft. Das Kühlmodul 1 ist somit um diese Schwenkachse durch den Gelenkpunkt C schwenkbar ― die auf Höhe des Befestigungspunktes A angelenkte Zugstrebe, dargestellt durch den Kräftepfeil F_{z}, fängt diese Nickbewegung des Kühlmodules 1 ab.

Das Stutzenteil 13 ist im Befestigungspunkt A gelenkig gelagert, wobei auf jeden der beiden Strömungsquerschnitte eine Gaskraft, dargestellt durch je einen Pfeil F_{G.} mit einem entsprechenden; nicht dargestellten Hebelarm zum Punkt A wirkt. Daraus resultieren entgegengerichtet wirkende Momente in Bezug auf den Punkt A. Um diese beiden Momente zu kompensieren, ist die Größe der Gaskräfte F_{G} in x- und z-Richtung (Produkt aus Querschnittsfläche des Stutzens und Druck der Ladeluft) mit den betreffenden Hebelarmen so abgestimmt, dass sich das resultierende Moment um die y-Achse zu Null ergibt. Somit ist das Stutzenteil 13 aufgrund der Anordnung des Befestigungs- und Gelenkpunktes A frei von aus Gaskräften resultierenden Momenten um eine in y-Richtung vor dem Stutzenteil 13 verlaufende Achse. Somit können auch keine Momente auf den Ladeluftkühler 3 übertragen werden. Analoge Kräfte und Momente wirken auf das Stutzenteil 12, welches mit dem Stutzenteil 13 den Stutzenkörper 14 bildet.

Die Erfindung wurde anhand einer Befestigungsanordnung für einen Ladeluftkühler in einem Kraftfahrzeug beschrieben. Es wird jedoch darauf hingewiesen, dass die Befestigungsanordnung auch für andere Zwecke verwendbar ist. Insbesondere ist eine erfindungsgemäße Befestigunsanordnung auch in andere Wärmeübertrager, wie beispielsweise Kühlmittelkühler, Heizkörper, Ölkühler, Kondensatoren und/oder Verdampfer einsetzbar.

## Patentansprüche

1. Befestigungsanordnung für einen Ladeluftkühler (3) in einem Kraftfahrzeug, wobei der Ladeluftkühler (3) Luftkästen (8, 9) mit Ladeluftstutzen (12, 13) für den Ein- und Austritt von Ladeluft und insbesondere einen Rohrrippenblock (5) aufweist, wobei im Bereich der Ladeluftstutzen (12, 13) am Kraftfahrzeug abstützbare Befestigungsmittel (15, 16) vorzugsweise vorgesehen sind und wobei die Ladeluftstutzen (12, 13) durch je eine Schnittstelle (10, 11) von den Luftkästen (8, 9) entkoppelbar sowie zu einem Stutzenkörper (14) miteinander verbunden sind.

2. Befestigungsanordnung nach Anspruch 1, **dadurch gekennzeichnet, dass** die Schnittstelle als flexibles Strömungskanalelement (10, 11) ausgebildet und zwischen den Ladeluftstufzen (12, 13) und den Luftkästen (8, 9) angeordnet ist.

3. Befestigungsanordnung nach Anspruch 2, **dadurch gekennzeichnet, dass** das Strömungskanalelement als Schlauchabschnitt (10, 11) aus einem elastomeren Werkstoff ausgebildet ist.

4. Befestigungsanordnung nach Anspruch 1, 2 oder 3, **dadurch gekennzeichnet, dass** die Ladeluftstutzen (12, 13) quer zum Rohrrippenblock (5) angeordneten Ein- und Austrittsstutzen (12b, 13b) aufweisen, auf die quer zum RohrrippenblocK (5) gerichtete Gaskräfte (F_{G}) wirken.

5. Befestigungsanordnung nach Anspruch 1, 2, 3 oder 4, **dadurch gekennzeichnet, dass** die vorzugsweise vorgesehenen Befestigungsmittel am Stutzenkörper (14) befestigt und als mindestens eine Zugstrebe (15, 16) zur Aufnahme der Gaskräfte (F_{G}) ausgebildet sind.

6. Befestigungsanordnung nach mindestens einem der Ansprüche 1 bis 5, **dadurch gekennzeichnet, dass** der Stutzenkörper (14) Befestigungspunkte (A, B) aufweist und in den Befestigungspunkten (A, B) derart gelagert ist, dass die sich aus Gaskräften (F_{G}) und Kräften der vorzugsweise vorgesehenen Befestigungsmittel (15, 16) ergebenden äußeren Momente um die x-, y- und z-Achse annähernd zu Null werden.

7. Befestigungsanordnung nach Anspruch 6, **dadurch gekennzeichnet, dass** der Stutzenkörper (14) in den Befestigungspunkten (A, B) an einem Kühlmittelkühler (2) gelagert ist, der fahrzeugseitig (21) abgestützt ist.

8. Befestigungsanordnung nach Anspruch 7, **dadurch gekennzeichnet, dass** die Ladeluftstutzen (12, 13) bzw. der Stutzenkörper (14) und die Ladeluftkästen (8, 9) jeweils mit dem Kühlmittekühler (2) verbunden sind.

9. Befestigungsanordnung nach einem der Ansprüche 2 bis 8, **dadurch gekennzeichnet, dass** die Luftkästen (8, 9) jeweils Schmalseiten (8a, 9a) aufweisen und dass im Bereich der Schmalseiten (8a, 9a) die flexiblen Strömungskanalelemente (10, 11) stimseitig angeordnet sind.

10. Kühlmittelkühler nach Anspruch 8 oder 9, **dadurch gekennzeichnet, dass** der Kühlmittelkühler (2) über seitliche Stützlager (21), vorzugsweise Schwenklager (C) mit einer gemeinsamen Nickachse fahrzeugseitig abgestützt ist.
